# EUROPEAN PATENT APPLICATION

(11) **EP 4 611 004 A1**
(43) Date of publication of application: **03.09.2025**
(21) Application number: 24160852.0
(22) Date of filing: 01.03.2024
(51) Int. Cl.: G21K 1/02, G01N 23/046

(54) **MONITORING A FOCAL SPOT**

(71) Applicant: Koninklijke Philips N.V., 5656 AG Eindhoven (NL)
(72) Inventor: VOGTMEIER, Gereon, Eindhoven (NL); DAERR, Heiner, Eindhoven (NL)
(74) Representative: Philips Intellectual Property & Standards

(57) **Abstract**

The invention relates to an X-ray imaging system (100). The X-ray imaging system comprises: an X-ray source (110) for generating X-ray radiation (118) at an X-ray focal spot (116); a detector (120) comprising detector pixels (122) for detecting X-ray radiation (118) from the X-ray source (110); an anti-scatter grid (130) located between the X-ray source (110) and the detector (120), wherein the anti-scatter grid (120) comprises grid cells aligned with the detector pixels, wherein a majority of the grid cells are focused grid cells (132) that are focused towards a common focus area, wherein at least one of the grid cells is a monitoring grid cell (134), wherein the monitoring grid cell (134) is focused towards a focus area different from the common focus area; and a processing unit (140) configured to read out a detector signal from the detector pixels (122), wherein the processing unit (140) is configured to determine a change of the focal spot by analyzing detected X-ray radiation (118) transmitted through the monitoring grid cell (134).

## Description

### FIELD OF THE INVENTION

The invention relates to an X-ray imaging system, an anti-scatter grid, a method for determining changes to a focal spot, a computer program element, and a computer readable medium.

### BACKGROUND OF THE INVENTION

US20210290195A1 describes an apparatus and a method for correcting signal variations in pixels of a main photoelectric conversion element in a radiation detection apparatus due to focal spot position drifts. Edge reference detectors are positioned next to the main detector, in the fan beam coverage but outside the scan field of view. The signal variations of the edge reference detector pixels under the anti-scatter grid shadow are used to estimate the real-time focal spot movement, which is used to estimate the shadow/signal variation on the main detector pixels that arein the scan field of view.

A computed tomography (CT) scanner is an example of an X-ray imaging system. ACT scanner generally includes an X-ray tube mounted on a rotatable gantry opposite of an X-ray detector. The X-ray tube rotates around an examination region located between the X-ray tube and the detector and emits polychromatic X-ray radiation that traverses the examination region. Electrical power is supplied to the X-ray tube with a high voltage generator.

The detector detects radiation that traverses the examination region and generates projection data indicative thereof. A reconstructor reconstructs the projection data to generate volumetric image data, which can be displayed, filmed, archived, conveyed to another device, etc.

The detector includes detector pixels that convert detected x-ray photons into electrical signals indicative thereof. For each revolution of the rotating gantry, the detector pixels detect and convert x-ray photons for a plurality of integration periods, each corresponding to a different angular position range. The time duration of an integration period depends on the rotating gantry rotation speed and the number integration periods for each revolution of the scan. At the beginning of each integration period, the integrators for the detector pixels are reset, and then the integrators receive and integrate the electrical signals over the integration period. The integrated signals form the projection data for that integration period.

The X-ray tube typically includes a cathode with a filament and an anode. A filament current is applied to the filament, which current heats the filament, causing the filament to expel electrons (thermionic emission), creating a space charge a short distance away from the filament. A peak tube voltage is applied across the cathode and the anode to cause a beam of the electrons to accelerate from the cathode and impinge the anode. The X-ray tube current, or emission current, represents the number of electrons per second flowing from the cathode to the anode. Electrostatic or magnetic focusing with e.g. grid electrodes or quadrupoles can be applied to control a size of and steer the beam of electrons. An interaction of the electrons with the material of the anode produces heat and radiation, including X-rays, which pass through a tube window, into an examination region, to a detector.

A surface area of the anode that receives the beam of electrons is referred to as a focal spot. The size of the focal spot is one factor that affects the image quality of the X-ray image data. For example, the focal spot size affects the spatial resolution, where a smaller focal spot size results in a greater spatial resolution than a larger focal spot size, e.g., due to less focal spot blur from geometric magnification. The size and/or position of the focal spot may depend on the X-ray tube voltage, beam focusing voltage and tube current.

Unwanted changes of the focal spot can lead to inconsistencies in the imaging data and image artifacts as well as be an indicator of X-ray source failure. Particularly high spatial resolution X-ray imaging technologies such as photon counting, are more sensitive to focal spot chances. Thus, there is a need for improved detection of changes of the X-ray focal spot.

### SUMMARY OF THE INVENTION

It is, inter alia, an object of the invention to provide improved monitoring of changes to the focal spot.

The invention is defined by the independent claims. Advantageous embodiments are defined in the dependent claims.

According to a first aspect, there is provided an X-ray imaging system. The X-ray imaging system comprises:
an X-ray source for generating X-ray radiation at an X-ray focal spot;
a detector comprising detector pixels for detecting X-ray radiation from the X-ray source;
an anti-scatter grid located between the X-ray source and the detector, wherein the anti-scatter grid comprises grid cells aligned with the detector pixels, wherein a majority of the grid cells are focused grid cells that are focused towards a common focus area, wherein at least one of the grid cells is a monitoring grid cell, wherein the monitoring grid cell is focused towards a focus area different from the common focus area; and
a processing unit configured to read out a detector signal from the detector pixels, wherein the processing unit is configured to determine a change of the focal spot by analyzing detected X-ray radiation transmitted through the monitoring grid cell.

Thanks to the anti-scatter grid with a combination of focused grid cells and at least one monitoring grid cell having a different focus area, monitoring of changes of the focal spot may be improved. A change of the focal spot may be a change of size and/or position. By detecting small changes of the focal spot at an early stage, inconsistencies in the imaging data and image artifacts may be avoided. Furthermore, changes over time in focal spot movement and/or size may lead to previous calibrations being invalid, reduced X-ray source lifetime etc. Therefore, the monitoring of focal spot movement and/or size may improve image quality, help manage calibrations, provide early triggers for preventive and corrective maintenance and service actions etc.

Preferably, the anti-scatter grid is placed adjacent to, or in close proximity to, the detector. The anti-scatter grid may be glued to the detector. The anti-scatter grid may be a 1D anti-scatter grid or a 2D anti-scatter grid or a hybrid anti-scatter grid comprising a 1D area and a 2D area. The part of the grid including the at least one monitoring grid cell is preferably a 2D anti-scatter grid with multiple grid cells in a 'length' direction and multiple grid cells in a 'width' direction of the anti-scatter grids.

A grid cell has a predetermined height and is formed between walls, also referred to as septa walls. The walls of each grid cell attenuate X-ray radiation and form a channel through which X-ray radiation can pass. The walls of the anti-scatter grid may comprise at least one high-Z material for attenuation of X-ray radiation. A high-Z material is a material (element) with a high atomic number Z. Such materials provide good absorption of X-ray and gamma-ray radiation, which is advantageous e.g. to absorb scattered radiation through the grid cells. The high-Z material is preferably a metal. Preferably, the high-Z material is Tungsten (Wolfram, W, with atomic number Z = 74). Other examples of high-Z materials include Molybdenum (Mo, atomic number 42), Tantalum (Ta, atomic number 73), Niobium (Nb, atomic number 41), Lead (Pb, atomic number 82), Bismuth (Bi, atomic number 83), Rhenium (Re, atomic number 75), Silver (Ag, atomic number 47) and Gold (Au, atomic number 79). The high-Z material preferably has an atomic number Z exceeding 40, and more preferably exceeding 70. The walls may alternatively or additionally or in combination comprise an alloy including at least one high-Z material.

The detector may have detector pixels in rows and columns. Similarly, the anti-scatter grid may have grid cells in rows and/or columns. Preferably, the channel of each grid cell is aligned with a corresponding detector pixel or a group of corresponding detector pixels. Each of the grid cells may be of the same or similar size as the other grid cells. Preferably, the vast majority (> 90%) of the grid cells are focused grid cells and only a small share (< 10%) are monitoring grid cells.

The focused grid cells, i.e. most of the grid cells of the anti-scatter grid, are focused on a common focus area. E.g. the walls of each focused grid cell may be tilted and/or shaped such that the channel of each focused grid cell points towards the common focus area. Virtual longitudinal axes through the channels of each of the focused grid cells may intersect in substantially the same point or line. The common focus area may in at least one direction have a size of the order of magnitude of a size of the focal spot, such as on the order of 0.1 to 5 mm. Preferably the common focus area intersects with an in-use default position or default average position of the X-ray source focal spot. In this way, X-ray radiation radiated in a beam from the X-ray focal spot may pass straight through a channel of a focused grid cell to reach the detector.

The at least one monitoring grid cell is focused on a different point than the common focus area. E.g. the walls of the grid monitoring cell may be tilted and/or shaped such that the channel through which X-ray radiation can pass points towards a focus area different from the common focus area. Alternatively, or additionally, the grid monitoring cell may comprise a lens to modify the focus area. Preferably the focus area of the monitoring grid cell does not (or to a lesser extent) intersect with an in-use default position or default average position of the X-ray source focal spot. In this way, X-ray radiation from the focal spot through the monitoring grid cell may be sensitive to changes in size and/or position of the focal spot. From analysis of the detected radiation through the monitoring grid cell, changes to the focal spot may be monitored with improved sensitivity.

The processing unit may comprise or otherwise interact with a processor, such as but not limited to a computer, a computer network, and/or another programmable apparatus, such as a single and/or multi core processing unit, a graphics processing unit, an accelerated processing unit, a digital signal processor, a field programmable gate array, an application-specific integrated circuit, etc.

According to an embodiment, the monitoring grid cell is located at a periphery of the anti-scatter grid, and wherein X-ray radiation through the monitoring grid cell is detected with a peripheral detector pixel. In this way, by using one or several peripheral pixels of the detector and anti-scatter grid to monitor changes of the focal spot, little or no disturbance is caused to the detection area used for field of view for image formation. Hence, image quality in the field of view remains unaffected by the monitoring grid cell or pixels having different focus areas as compared to the other grid cells. Furthermore, the monitoring grid cell located in the peripherals may be used to detect signals with a high signal to noise ratio improving the sensitivity to focal spot changes.
According to an embodiment, the processing unit is configured to determine a change of the X-ray focal spot by comparing detected X-ray radiation transmitted through the monitoring grid cell with detected radiation transmitted through at least one of the focused grid cells.

According to an embodiment, the anti-scatter grid comprises at least two monitoring grid cells, wherein a first monitoring grid cell has a different focus area than a second monitoring grid cell, wherein the first and the second monitoring grid cells have respective focus areas that are different from the common focus area, and wherein the processing unit is configured to determine a change of the X-ray focal spot by comparing detected X-ray radiation transmitted through the first monitoring grid cell with detected radiation transmitted through the second monitoring grid cell. By comparing radiation through at least two monitoring grid cells with different focus areas, more precise information about if/how the focal spot has changed can be derived.

According to an embodiment, the anti-scatter grid comprises at least four monitoring grid cells with mutually different focus areas, wherein the at least four monitoring grid cells have focus areas on each side of the common focus area, and wherein the processing unit is configured to determine a change of the X-ray focal spot by comparing detected X-ray radiation transmitted through each of the at least four monitoring grid cells. By comparing radiation through monitoring grid cells with focus areas on either side of the common focus area, such as in positions `top', 'bottom', 'left', 'right', changes to the focal spot in each direction may be accurately monitored.

According to an embodiment, the processing unit is configured to determine focal spot breathing or oscillation, such as oscillation on an anode track, by comparing changes to the focal spot at multiple time points.

According to an embodiment, the processing unit is configured to output an alert and/or a suggested maintenance action as a result of the determined change of the focal spot. In this way, timely and possibly preventative or corrective actions can be taken to optimize imaging and/or prevent system downtime.

According to an embodiment, the processing unit is configured to determine a correction signal for counteracting the determined change of the focal spot, and/or a correction signal for processing imaging data to correct for the determined change of the focal spot. In this way, the correction signal may be used to correct for determined focal spot changes e.g. by adapting signals for controlling the electrostatic or magnetic focusing of the electron beam, adjusting acquired images for effects of focal spot changes etc. The correction signal may be used directly during scanning, for image (post) processing, during calibration procedures for a subsequent scan etc.

According to a second aspect, there is provided an anti-scatter grid for use in an X-ray imaging system according to embodiments of the first aspect, wherein the anti-scatter grid comprises grid cells, wherein a majority of the grid cells are focused grid cells that are focused towards a common focus area, wherein at least one of the grid cells is a monitoring grid cell, and wherein the monitoring grid cell is focused towards a focus area different from the common focus area.

According to an embodiment, the anti-scatter grid comprises at least four monitoring grid cells with different focus areas, and wherein the at least four monitoring grid cells have focus areas on each side of the common focus area.

According to an embodiment, the anti-scatter grid has been manufactured with a 3D additive manufacturing technology or a 3D subtractive manufacturing technology. By manufacturing the anti-scatter grid from a 3D model, the focus area, shape etc. of individual grid cells, such as the monitoring grid cell(s) can be precisely controlled. This allows for more accurate monitoring of changes to the focal spot. Examples of such 3D additive or subtractive manufacturing technologies include metal laser sintering, electron beam powder fusion, etching-assisted laser micro-fabrication etc.

According to an embodiment, the anti-scatter grid is a monolithic grid or a layered single grid structure. By manufacturing the anti-scatter grid as a monolithic grid or a layered single grid, i.e. built as a single unit with no horizontal tiling, image detection and/or monitoring of focal spot changes may be improved since e.g. edge effects from tiled structures are avoided. 3D additive or subtractive manufacturing is advantageous to achieve such monolithic or layered single grid. In the context of the present invention, a layered single grid is a single grid unit built from multiple layers, or stacked or laminated sheets, of material. Each layer or sheet may comprise more than one material. Different layers or sheets may comprise different materials.

According to a third aspect, there is provided a method for determining changes to a focal spot of an X-ray source of an X-ray imaging system. The method comprises:
receiving a detector signal from a detector comprising detector pixels detecting X-ray radiation from the X-ray source, wherein an anti-scatter grid is located between the X-ray source and the detector, wherein the anti-scatter grid comprises grid cells aligned with the detector pixels, wherein a majority of the grid cells are focused grid cells that are focused towards a common focus area, wherein at least one of the grid cells is a monitoring grid cell, wherein the monitoring grid cell is focused towards a focus area different from the common focus area; and
determining a change of the focal spot by analyzing detected X-ray radiation transmitted through the monitoring grid cell.

According to a fourth aspect, there is provided a computer program element, which, when being executed by a processing unit, is adapted to cause the processing unit to perform the method according to the third aspect. The computer program element or product may be made available for downloading from a server, e.g. via the internet.

According to a fifth aspect, there is provided a computer-readable medium having stored thereon the computer program element as mentioned above. The medium may be non-transitory. For example, the medium may be a floppy disk, a CD, a DVD, or a solid-state memory device.

These and other aspects of the invention will be apparent from and elucidated with reference to the embodiments described hereinafter.

### BRIEF DESCRIPTION OF THE DRAWINGS

Fig. 1 schematically illustrates an X-ray imaging system.
Fig. 2 schematically illustrates detected X-ray radiation from a default focal spot position and a changed focal spot position.
Fig. 3 schematically illustrates detected X-ray radiation from a default focal spot position and a changed focal spot position.
Fig. 4 schematically illustrates an anti-scatter grid with four monitoring grid pixels having different focus areas.
Fig. 5 schematically illustrates a method for determining changes to a focal spot of an X-ray source.

### DETAILED DESCRIPTION OF EMBODIMENTS

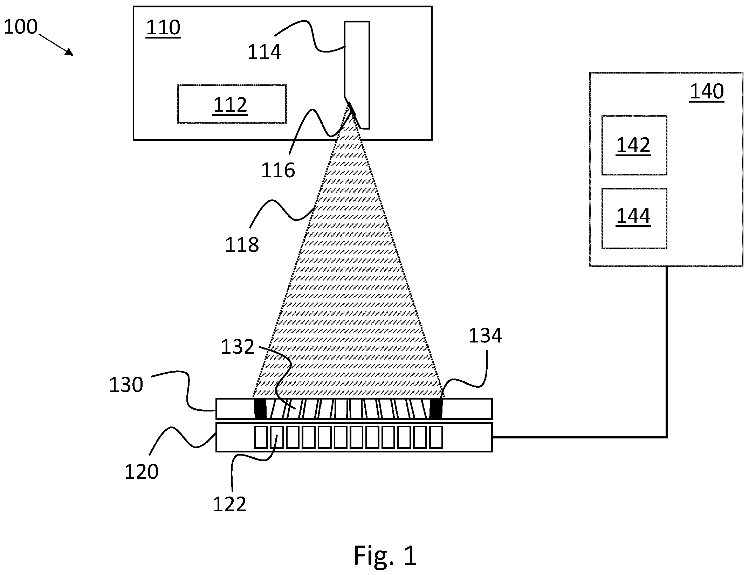

Fig. 1 schematically illustrates an X-ray imaging system 100 according to embodiments of the invention. The system comprises an X-ray source 110 for generating X-ray radiation 118. The X-ray source 110 in the figure includes a cathode 112 and an anode 114. Preferably, the anode 114 is a rotating anode. X-ray radiation 118 is generated at a focal spot 116 on the anode, where electrons emitted from the cathode 112 impinge the anode 114. The X-ray imaging system 100 further includes a detector 120 with detector pixels 122. The detector pixels 122 can detect X-ray radiation 118 with spatial resolution. The X-ray imaging system 100 includes an anti-scatter grid 130. The anti-scatter grid 130 is located between the X-ray source 110 and the detector 120. Generally, the anti-scatter grid 130 is located close to the detector 120, such as directly adjacent to the detector 120 or in close proximity to the to the detector. A subject to be imaged by the X-ray imaging system 100 would typically be positioned between the X-ray source 110 and the anti-scatter grid 130. The anti-scatter grid 130 includes multiple focused grid cells 132. Each focused grid cell 132 is focused towards the same common focus area. The walls of each focused grid cell 132 may be tilted and/or shaped such that the channel of each grid cell 132 points towards the common focus area. Virtual longitudinal axes through the channels of each of the focused grid cells may intersect in substantially the same point or line. The common focus area may in at least one direction have a size of the order of magnitude of a size of the focal spot, such as on the order of 0.1 to 5 mm. Preferably, the common focus area intersects with an in-use default position or default average position of the X-ray source focal spot 116. In this way, X-ray radiation1 18 radiated in a beam from the X-ray focal 116 spot may pass straight through a channel of a focused grid cell 132 to reach the detector 120.

The anti-scatter grid 130 comprises at least one monitoring grid cell 134. Preferably, the anti-scatter grid 130 comprises at least two monitoring grid cells 134 and more preferably at least four monitoring grid cells 134. Contrary to the focused grid cells 132, each monitoring grid cell 134 is focused towards a different focus area than the common focus area. X-ray radiation 118 from the X-ray source may be transmitted through each monitoring cell 134 to a corresponding detector pixel 122. Preferably, the at least one monitoring grid cell 134 is located at the periphery of the anti-scatter grid. In this way, the focal spot 116 may be monitored with the monitoring grid cell, with little or no disturbance to imaging in the field of view of the imaging system 100. An anti-scatter grid 130 suitable for the imaging system 100 as illustrated in Fig. 1 may preferably be manufactured with a 3D additive manufacturing technology or a 3D subtractive manufacturing technology. Examples of 3D additive or subtractive manufacturing technologies include metal laser sintering, electron beam powder fusion, etching-assisted laser micro-fabrication etc.

The imaging system 100 includes a processing unit 140. The processing unit 140 is connected to the detector 120 and is configured to read out a detector signal from the detector pixels 122. The processing unit may be connected to other parts of the imaging system 100 as well, such as to the X-ray source, and/or to a high voltage generator (not shown), and/or to electron beam optics (not shown), and/or to a user interface (not shown) etc. The connection between the processing unit 140 and the detector and/or a part of the imaging system may be either wired or wireless. The processing unit may comprise or otherwise interact with a processor 142. The processing unit may comprise or otherwise interact with a memory 144. The processing unit 140 may be located in or in proximity to the imaging system 100 or may (partly) be located remotely from the imaging system 100. The processing unit 142 may be a distributed computing system.

The processing unit 140 is configured to analyze the detected X-ray radiation 118 transmitted through the at least one monitoring grid cell 134. The detector signal from the detector pixels 122 provides information about changes in e.g. detected X-ray radiation intensity through the monitoring grid cell 134. The processing unit 140 may compare detected radiation through the monitoring grid cell 134 over time and/or may compare the detected radiation through the monitoring grid cell 134 with detected radiation through at least one of the focused grid cells. In examples where the anti-scatter grid 130 has multiple monitoring grid cells 134, the processing unit may, additionally or alternatively, compare detected radiation between monitoring grid cells 134. From the analysis of the detected radiation through at least one monitoring grid cell 134, the processing unit may determine a change of the focal spot. Detected changes to the focal spot may be a change in size and/or position of the focal spot as compared to a default size and/or position. Determined changes to the focal spot may also be temporary changes, such as determined focal spot breathing, oscillation of the focal spot on the anode focal track etc. When the imaging system 100 utilizes focal spot 'jumping' between multiple focal spot positions, the processing unit may be configured to determine deviations from the default average focal spot position, deviation in jumping amplitude etc.

The processing unit 140 may be configured to output an alert and/or a suggested maintenance action as a result of the determined change of the focal spot. In this way, timely and possibly preventative or corrective actions can be taken to optimize imaging and/or prevent system downtime. Such an alert and/or suggested action may be, locally or remotely, output to users, service staff etc. via suitable hardware such as a user interface, an imaging workstation, a device for audible signals, a device for visible signals, a device for haptic signals etc.

The processing unit 140 may be configured to determine a correction signal. The correction signal may be used to counteract the determined change of the focal spot, such as via control of electron beam optics, X-ray source parameters like cathode filament current, X-ray source voltage etc. Alternatively, or additionally, the control signal may be used for image correction, such as to correct for deviations to images acquired by the imaging system 100 and caused by changes to the focal spot. The correction signal may be used directly during scanning, for image (post) processing, during calibration procedures for a subsequent scan etc.

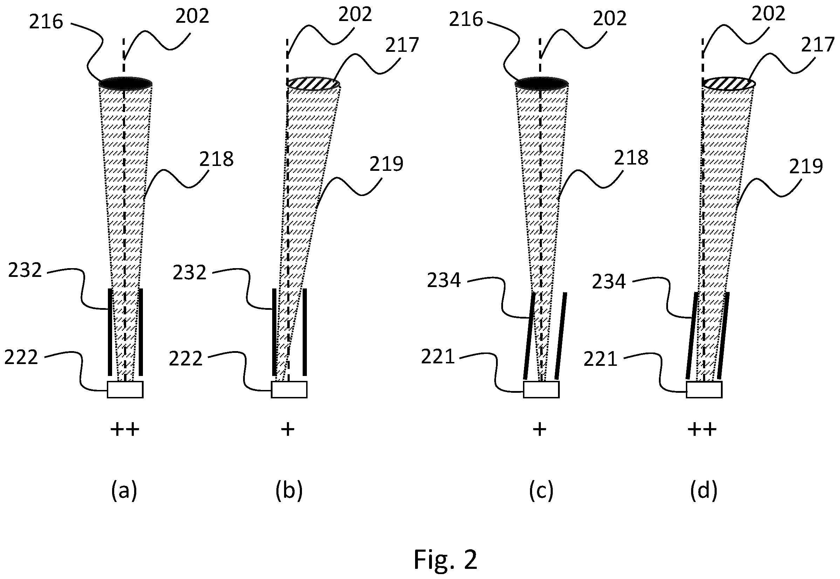

Fig. 2 schematically illustrates how changes in the focal spot position may influence the detected X-ray radiation through grid cells. In Fig. 2, part (a) shows a focused grid cell 232, positioned above a detector pixel 222, in between the detector pixel 222 and an X-ray focal spot 216. In (a), the focal spot 216 is in a first (default) position. The dashed longitudinal axes 202 going through the center of the focal spot 216 in the first position illustrates that the focused grid cell 232 is focused towards the area of the focal spot 216 in the first position. Therefore, the detected amount of X-ray radiation 218 is indicated as high with ++ in (a).

In Fig. 2, in (b), the same focused grid pixel 232 as in (a) is shown. However, in (b) the situation has changed in that the X-ray focal spot is a changed focal spot 217 in a second (non-default) position. As a result, the grid cell is not focused towards the area where the changed focal spot 217 is present, and hence the detected radiation is lower, as indicated with one +.

In Fig. 2, part (c) shows the same focal spot situation as in (a), but in this case from the perspective of a monitoring grid cell 234 above a detector pixel 221. Since the monitoring grid cell 234 is not focused towards the focal spot 216 in the first (default) position, detected radiation through the monitoring grid cell in (c) is lower compared to what is detected with the focused grid cell in (a). This is illustrated with one + in (c).

In Fig. 2, part (d) illustrates a situation with the changed focal spot 217 in the second (non-default) position, with same the monitoring grid cell as in (c). In the example in (d), the change in position of the focal spot 217 coincides with the direction of focus of the monitoring grid cell 234. Therefore, detected radiation through the monitoring grid cell 234 is higher compared to in (c), as indicated with ++. Therefore, the change of the focal spot can be detected with high precision. The large relative change from the low signal in (c) to the high signal in (d) provides high sensitivity to the monitoring of the focal spot. If the signal from the detector pixel 222 under the focused grid cell 232 in (b) is compared with the signal from the detector pixel 221 under the monitoring grid cell 234, the sensitivity can be further improved as the signals change in opposite directions when going from the focal spot 216 in the first position (a and c) to the focal spot 217 in the second position (b and d). Furthermore, the change in detected radiation through the monitoring grid cell 234 also provides information about the direction in which the focal spot has moved. In the simple example in Fig. 2, it is clear from the signal of the detector pixel 221 that the focal spot changing from a first position in (c) to a second position in (d) moves into the focus direction of the monitoring grid cell, since the signal increases.

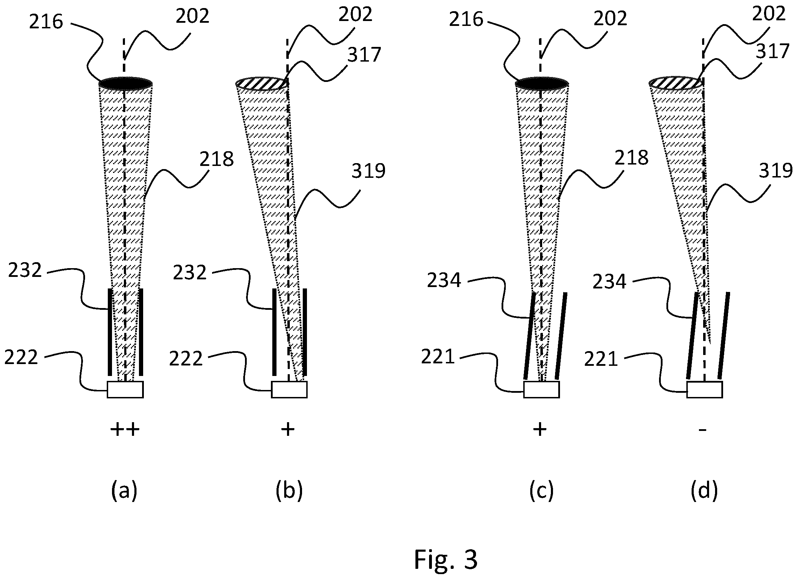

Fig. 3 schematically shows the same type of comparison as Fig. 2 of a focused grid cell 232 in (a) and (b) with a monitoring grid cell 234 in (c) and (d). The difference with respect to Fig. 2 is that in Fig. 3, the focal spot moves to a third position, as shown by the changed focal spot 317 in Fig. 3, parts (b) and (d). The net effect of the changed focal spot 317 on X-ray radiation through the focused grid cell 232 in Fig. 3, part (b), is basically the same as in Fig. 2, part (b). However, the change in Fig. 3, part (d), is the opposite to in Fig. 2, part (d). In Fig. 3, part (d), the focal spot 317 has moved further out of the focus of the monitoring grid cell 234, which means that no or almost no radiation 319 is transmitted through the monitoring grid cell 234 in (d). This again illustrates how the monitoring grid cell 234 can be used to determine changes to the focal spot 317 with high sensitivity and that the change in signal may also provide information about a direction of the focal spot change. From the examples in Figs 2. and 3, it can also be understood that with e.g. two monitoring grid cells, such as one focused 'left' and another one focused 'right', the sensitivity for changes in position and/or size in either of the directions can be further improved.

In case the X-ray source 110 features beam shaping optics which enable controlled movements of the electron beam, the detector signals acquired within the monitoring grid cells may be calibrated against the focal spot position and/or against the signals used to move the electron beam. This information may be used to either correct the focal spot position and/or to derive the focal spot position in a time resolved manner to be used during the image formation process.

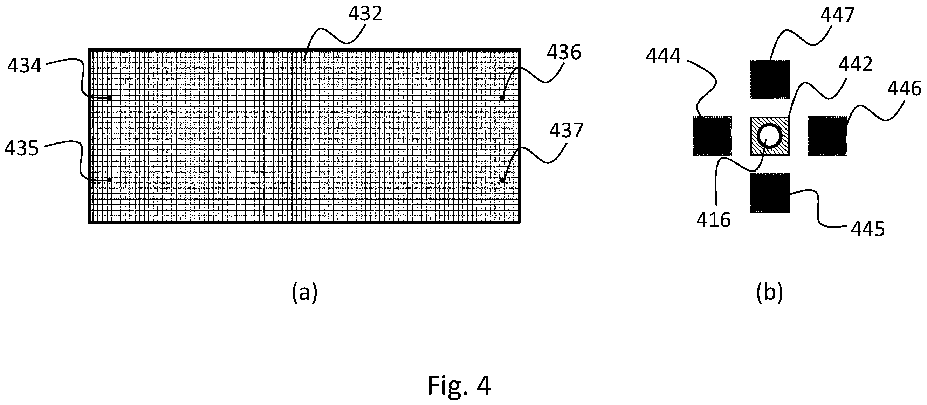

Fig. 4 illustrates in (a) a top-down view of an anti-scatter grid 130 with a large number of focused grid cells 432, and comprising four monitoring grid cells 434, 435, 436, 437. Such an anti-scatter grid may be a grid used for computed tomography in a gantry, or may be a grid used together with a flat X-ray detector in e.g. a fluoroscopy or radiography system. In Fig. 4, part (b) shows a schematic view of the focal spot position and grid cell focus areas. The default position of the focal spot 416 is illustrated with a circle. The focused grid cells 432 are focused towards a common focus area 442, as illustrated with the striped square surrounding the focal spot. This means that in this example, the focused grid cells are focused directly towards the default area of the focal spot 416, to maximize transmission of X-ray radiation 118 generated at the focal spot 416. Contrary to the focused grid cells 432, each of the monitoring grid cells 434, 435, 436, 437 may be focused on a respectively different area. Preferably, the four respectively different focus areas of the monitoring grid cells 434, 435, 436, 437 are surrounding the common focus area. As an example, a first monitoring grid cell 434 may be focused on an area 444 to the 'left' of the common focus area 442. A second monitoring grid cell 435 may be focused on an area 'below' the common focus area 442. A third monitoring grid cell 436 may be focused on an area to the 'right' of the common focus area 442. A fourth monitoring grid cell 437 may be focused on an area 'above' the common focus area 442. In such a configuration, the four monitoring grid cells 434, 435, 436, 437 may be used to determine if, and in which direction, the focal spot position may change. Temporarily or permanently. Furthermore, the four monitoring grid cells 434, 435, 436, 437 may be used to determine if the focal spot, temporarily or permanently, changes size, and if so in which direction(s) the change of size occurred. The example in Fig. 4 is illustrated with two monitoring grid cells 434, 435 on one side of the anti-scatter grid and two monitoring grid cells 436, 437 on the other side. However, the skilled person will understand that many variations of positioning and focus of individual monitoring grid cells 434, 435, 436, 437 are possible to achieve the advantageous monitoring of the focal spot.

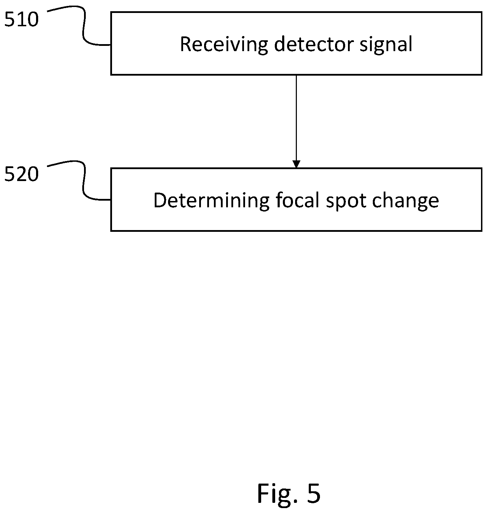

Fig. 5 schematically illustrates a method for determining changes to a focal spot of an X-ray source of an X-ray imaging system. The method comprises:
receiving 510 a detector signal from a detector comprising detector pixels detecting X-ray radiation from the X-ray source, wherein an anti-scatter grid is located between the X-ray source and the detector, wherein the anti-scatter grid comprises grid cells aligned with the detector pixels, wherein a majority of the grid cells are focused grid cells that are focused towards a common focus area, wherein at least one of the grid cells is a monitoring grid cell, wherein the monitoring grid cell is focused towards a focus area different from the common focus area; and
determining 520 a change of the focal spot by analyzing detected X-ray radiation transmitted through the monitoring grid cell.

The monitoring grid cell may be located at a periphery of the anti-scatter grid, and X-ray radiation through the monitoring grid cell may be detected with a peripheral detector pixel.

A change of the focal spot may be determined 520 by comparing detected X-ray radiation transmitted through the monitoring grid cell with detected radiation transmitted through at least one of the focused grid cells.

The anti-scatter grid may comprise at least two monitoring grid cells, wherein a first monitoring grid cell has a different focus area than a second monitoring grid cell, wherein the first and the second monitoring grid cells have respective focus areas that are different from the common focus area. A change of the X-ray focal spot may be determined 520 by comparing detected X-ray radiation transmitted through the first monitoring grid cell with detected radiation transmitted through the second monitoring grid cell.

The anti-scatter grid may comprise at least four monitoring grid cells with mutually different focus areas, wherein the at least four monitoring grid cells have focus areas on each side of the common focus area. A change of the X-ray focal spot may be determined 520 by comparing detected X-ray radiation transmitted through each of the at least four monitoring grid cells.

Focal spot breathing or oscillation may be determined 520 by comparing changes to the focal spot at multiple time points.

The method may comprise outputting an alert and/or a suggested maintenance action as a result of the determined change of the focal spot.

The method may comprise determining a correction signal. Such a correction signal may be suitable for counteracting the determined 520 change of the focal spot. Alternatively, or additionally, such a correction signal may be suitable for processing imaging data to correct for the determined 520 change of the focal spot.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word "comprising" does not exclude the presence of elements or steps other than those listed in a claim. The word "a" or "an" preceding an element does not exclude the presence of a plurality of such elements. The invention may be implemented by means of hardware comprising several distinct elements, and/or by means of a suitably programmed processor. In the device claim enumerating several means, several of these means may be embodied by one and the same item of hardware. Measures recited in mutually different dependent claims may advantageously be used in combination.

## Claims

1. An X-ray imaging system (100) comprising:
an X-ray source (110) for generating X-ray radiation (118) at an X-ray focal spot (116);
a detector (120) comprising detector pixels (122) for detecting X-ray radiation (118) from the X-ray source (110);
an anti-scatter grid (130) located between the X-ray source (110) and the detector (120), wherein the anti-scatter grid (120) comprises grid cells aligned with the detector pixels, wherein a majority of the grid cells are focused grid cells (132) that are focused towards a common focus area, wherein at least one of the grid cells is a monitoring grid cell (134), wherein the monitoring grid cell (134) is focused towards a focus area different from the common focus area; and
a processing unit (140) configured to read out a detector signal from the detector pixels (122), wherein the processing unit (140) is configured to determine a change of the focal spot by analyzing detected X-ray radiation (118) transmitted through the monitoring grid cell (134).

2. The imaging system according to claim 1, wherein the monitoring grid cell (134) is located at a periphery of the anti-scatter grid (130), and wherein X-ray radiation through the monitoring grid cell (134) is detected with a peripheral detector pixel.

3. The imaging system according to claim 1 or 2, wherein the processing unit (140) is configured to determine a change of the focal spot by comparing detected X-ray radiation transmitted through the monitoring grid cell (134) with detected radiation transmitted through at least one of the focused grid cells (132).

4. The imaging system according to claim 1 or 2 or 3, wherein the anti-scatter grid (130) comprises at least two monitoring grid cells (134), wherein a first monitoring grid cell has a different focus area than a second monitoring grid cell, wherein the first and the second monitoring grid cells have respective focus areas that are different from the common focus area, and wherein the processing unit (140) is configured to determine a change of the X-ray focal spot by comparing detected X-ray radiation transmitted through the first monitoring grid cell with detected radiation transmitted through the second monitoring grid cell.

5. The imaging system according to claim 4, wherein the anti-scatter grid (130) comprises at least four monitoring grid cells with mutually different focus areas, wherein the at least four monitoring grid cells have focus areas on each side of the common focus area, and wherein the processing unit is configured to determine a change of the X-ray focal spot by comparing detected X-ray radiation transmitted through each of the at least four monitoring grid cells.

6. The imaging system according to any of the preceding claims, wherein the processing unit (140) is configured to determine focal spot breathing or oscillation, by comparing changes to the focal spot at multiple time points.

7. The imaging system according to any of the preceding claims, wherein the processing unit (140) is configured to output an alert and/or a suggested maintenance action as a result of the determined change of the focal spot.

8. The imaging system according to any of the preceding claims, wherein the processing unit (140) is configured to determine a correction signal, for counteracting the determined change of the focal spot, and/or for processing imaging data to correct for the determined change of the focal spot.

9. An anti-scatter grid (130) for use in an X-ray imaging system (100) according to any of the preceding claims, wherein the anti-scatter grid comprises grid cells, wherein a majority of the grid cells are focused grid cells (132) that are focused towards a common focus area, wherein at least one of the grid cells is a monitoring grid cell (134), and wherein the monitoring grid cell (134) is focused towards a focus area different from the common focus area.

10. The anti-scatter grid according to claim 9, wherein the anti-scatter grid (130) comprises at least four monitoring grid cells with different focus areas, and wherein the at least four monitoring grid cells have focus areas on each side of the common focus area.

11. The anti-scatter grid according to claim 9 or claim 10, wherein the anti-scatter grid (130) has been manufactured with a 3D additive manufacturing technology or a 3D subtractive manufacturing technology.

12. The anti-scatter grid according to claim 11, wherein the anti-scatter grid (130) is a monolithic grid or a layered single grid structure.

13. A method for determining changes to a focal spot of an X-ray source of an X-ray imaging system, the method comprising:
receiving (510) a detector signal from a detector comprising detector pixels detecting X-ray radiation from the X-ray source, wherein an anti-scatter grid is located between the X-ray source and the detector, wherein the anti-scatter grid comprises grid cells aligned with the detector pixels, wherein a majority of the grid cells are focused grid cells that are focused towards a common focus area, wherein at least one of the grid cells is a monitoring grid cell, wherein the monitoring grid cell is focused towards a focus area different from the common focus area; and
determining (520) a change of the focal spot by analyzing detected X-ray radiation transmitted through the monitoring grid cell.

14. A computer program element, which, when being executed by a processing unit (140), is adapted to cause the processing unit to perform the method according to claim 13.

15. A computer-readable medium having stored thereon the computer program element of claim 14.
